# EUROPEAN PATENT SPECIFICATION

(11) **EP 3 012 161 B1**
(45) Date of publication and mention of the grant of the patent: **06.06.2018**
(21) Application number: 15186651.4
(22) Date of filing: 24.09.2015
(51) Int. Cl.: B60R 21/36

(54) **PEDESTRIAN PROTECTION ARIBAG DEVICE**
AIRBAG-VORRICHTUNG ZUM FUSSGÄNGERSCHUTZ
DISPOSITIF AIRBAG DE PROTECTION DES PIÉTONS

(30) Priority: 24.10.2014 JP 2014217640
(43) Date of publication of application: 27.04.2016
(60) Divisional application: 18169306.0
(73) Proprietor: Toyoda Gosei Co., Ltd., Kiyosu-shi Aichi 452-8564 (JP)
(72) Inventor: SUEMITSU, Taizo, Kiyosu-shi, Aichi 452-8564 (JP); UMEYAMA, Takayuki, Kiyosu-shi, Aichi 452-8564 (JP)
(74) Representative: Kramer Barske Schmidtchen Patentanwälte PartG mbB

(56) References cited:
- WO-A1-2015/098890
- WO-A1-2015/136774
- WO-A2-2014/139937
- DE-A1-102011 088 779
- JP-A- 2005 247 188
- US-A1- 2014 034 406

## Description

### BACKGROUND OF THE INVENTION

### 1. FIELD OF THE INVENTION

The present invention relates to a pedestrian protection airbag device mountable on a backside of a vicinity of the rear end of a vehicle hood.

### 2. DESCRIPTION OF RELATED ART

JP 2005-343202 A discloses a known pedestrian protection airbag device mountable on a backside of a vehicle hood. The airbag device includes an airbag in a folded-up configuration and an inflator for feeding an inflation gas to the airbag, and the airbag and the inflator are housed in a case fabricated of synthetic resin. The case is supported on the underside by a supporting member of a sheet metal. The inflator is secured to the supporting member.

However, this configuration, in which the inflator having a rigidity is supported by the metal supporting member, may add a great reaction force to a pedestrian if the pedestrian contacts a region of the hood around which the inflator is located and contacts indirectly with the inflator.

WO 2014/139937 A2 relates to an airbag module assembly for a motor vehicle comprising an airbag module that comprises an airbag which can be unfolded along at least one portion of a windscreen of the motor vehicle in order to protect a person present outside the motor vehicle, wherein the airbag module assembly comprises a separator that counteracts a thermal coupling of the airbag module to an engine compartment of the motor vehicle, wherein the separator surrounds a housing of the airbag module at least in part, the contour of the separator following the outer contour of the housing at least in certain portions.

US 2014/034406 A1 relates to a gas bag arrangement for a motor vehicle, comprising a gas bag which can be deployed for the protection of a person present outside the vehicle along at least a section of the front window and/or another portion of an outside of the motor vehicle, and a housing in which the gas bag is arranged, wherein the housing is different from a cover of a receiving region of the motor vehicle, which extends in front of the front window, and wherein the housing is designed such that it at least partly covers the gas bag towards the cover of the motor vehicle based on the situation with the gas bag arrangement being mounted in the vehicle, and the housing comprises a first and a second housing part, wherein the first housing part includes an opening for introducing the gas bag into the housing and the second housing part at least partly covers the opening in the first housing part, wherein after assembly of the gas bag arrangement the second housing part covers the gas bag towards the cover of the motor vehicle, and wherein the first housing part is connected with the second housing part.

JP 2005-247188 A relates to an airbag device equipped with an airbag comprising an airbag body on the external surface of which a recess is formed in full expansion as a single body, and a surface protecting sheet which circumferentially covers an area corresponding to the recess, and at the same time, is placed in a tensile state by the expansion of the airbag body, wherein a length corresponding to the width direction in the tensile state of the surface protecting sheet is formed shorter than the width directional length crossing the recess in the full expansion in the airbag body, such that the formation of the recess when the airbag body is expanded is suppressed by the surface protecting sheet.

DE 10 2011 088 779 A1 relates to an airbag for a motor vehicle, wherein the airbag is accommodated in an accommodation tray attached with its front and rear edge portions at the lower side of a front flap, wherein when activating the airbag the rear edge portion of the accommodation tray is released from the lower side of the front flap, such that the accommodation tray remains connected with the lower side of the front flap only with the front edge portion and the accommodation tray can flap downward at the rear.

WO 2015/098890 A1 and WO 2015/136774 A1 relate to a vehicular pedestrian-protecting airbag device.

### SUMMARY OF THE INVENTION

The object of the present invention is to provide a pedestrian protection airbag device that will not give a great reaction force to a pedestrian when he contacts a region of a vehicle around which the inflator is located.

This object is achieved by the pedestrian protection airbag device according to claim 1. Further embodiments of the present invention are set out in the dependent claims.

In the following, pedestrian protection airbag devices including a displacement allowing section are described for comparative purposes only, and hence not being a part of the present invention.

### BRIEF DESCRIPTION OF DRAWINGS

Fig. 1 is a plan view of a vehicle equipped with a pedestrian protection airbag device embodying the invention;
Fig. 2 is a plan view of the pedestrian protection airbag device of Fig. 1;
Fig. 3 is a schematic vertical section of the vehicle of Fig. 1 taken along line III-III of Fig. 1, showing a hood lifting device;
Fig. 4 is a schematic vertical section of the airbag device of Fig. 2, taken along line IV-IV of Fig. 1;
Fig. 5 is a partial enlarged vertical section of the airbag device of Fig. 2;
Fig. 6 is a schematic vertical section of the airbag device of Fig. 2, taken along line VI-VI of Fig .1;
Fig. 7 is a schematic vertical section of the airbag device of Fig. 2, taken along line VII-VII of Fig. 1;
Fig. 8 is a schematic exploded perspective view of a case, an airbag, inflators and a mounting bracket constituting the airbag device of Fig. 2;
Fig. 9 is a bottom view of the airbag device of Fig .2;
Fig. 10 is a partial enlarged plan view of the mounting bracket;
Fig. 11 is a schematic vertical section of the vehicle equipped with the airbag device showing an actuator of the hood lifting device as actuated;
Fig. 12 is a schematic vertical section of the airbag device of Fig. 2 taken along a front and rear direction of the vehicle, showing an initial stage of airbag deployment;
Fig. 13 is a schematic vertical section of the airbag device of Fig. 2 taken along a front and rear direction of the vehicle, showing the airbag having completed deployment;
Fig. 14 is a schematic vertical section of the airbag device of Fig. 2 in an unactuated state as a pedestrian contacts a region in a vicinity of the inflator;
Fig. 15 is a vertical sectional view of an alternative embodiment of the pedestrian protection airbag device of the invention;
Fig. 16 is a vertical sectional view of another alternative embodiment of the pedestrian protection airbag device of the invention;
Fig. 17 is a plan view of yet another alternative embodiment of the pedestrian protection airbag device of the invention; and
Fig. 18 is a vertical sectional view of the airbag device of Fig. 17.

### DESCRIPTION OF PREFERRED EMBODIMENTS

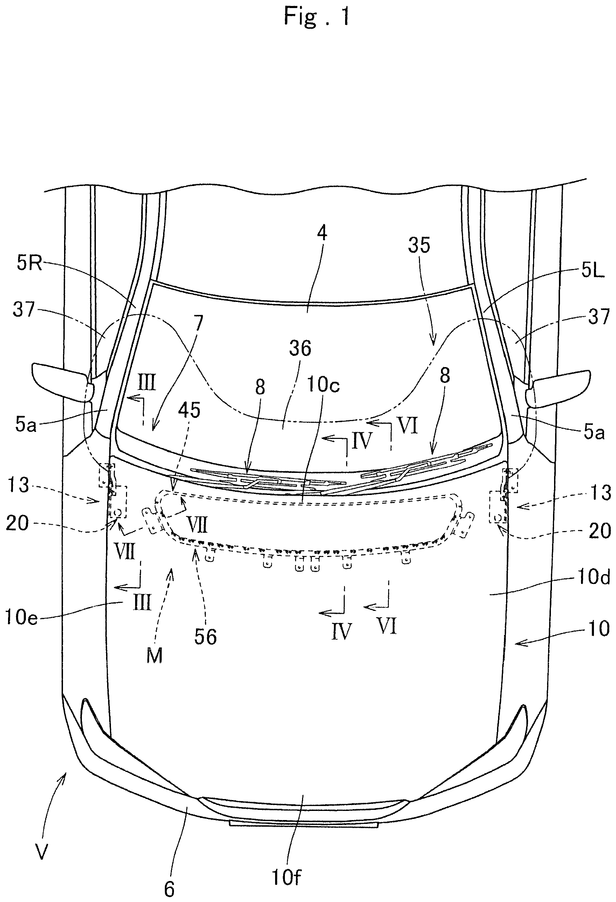

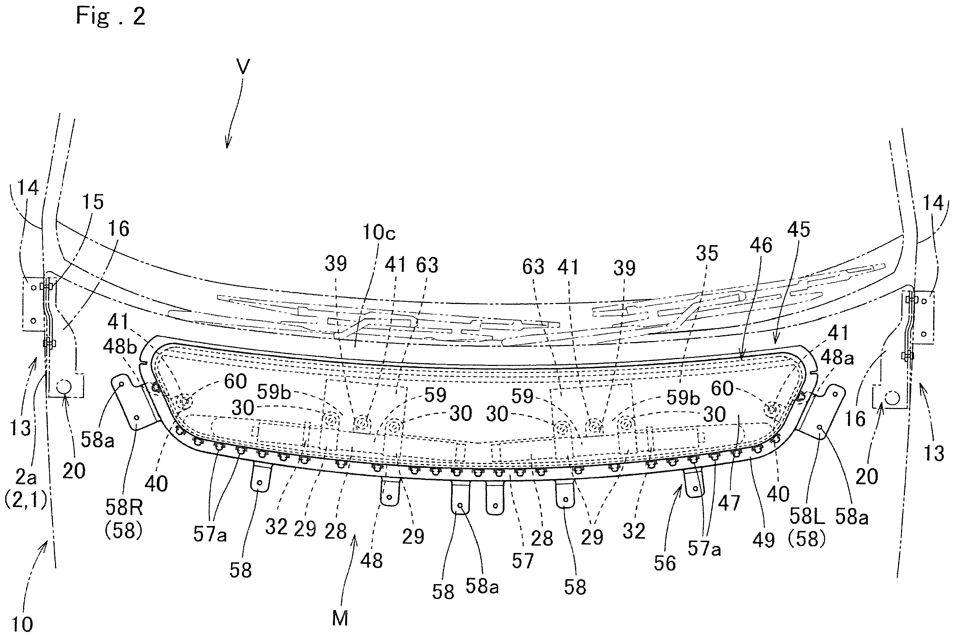

Preferred embodiments of the invention are now described referring to the accompanying drawings. As shown in Figs. 1 and 2, a pedestrian protection airbag device M embodying the invention is located on a backside of a vicinity of the rear end 10c of a vehicle hood 10, at a vicinity of the center in a left and right direction of a vehicle V between left and right front pillars 5L and 5R. The airbag device M is designed to cooperate with hood lifting devices 20 that lift the rear end 10c of the hood 10. Unless otherwise specified, front/rear, up/down and left/right directions in this specification are intended to refer to front/rear, up/down and left/right directions of the vehicle V.

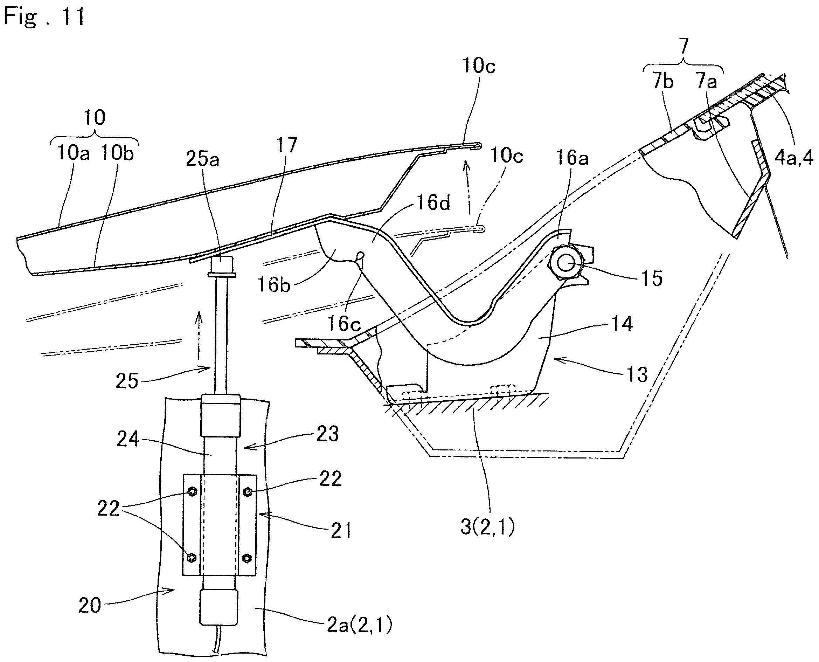

The vehicle V includes inside the front bumper 6 (Fig. 1) a not-shown sensor that detects an impact against a pedestrian. A not-shown actuating circuit is designed to activate an inflator 28 of the airbag device M in response to a signal fed from the sensor that has sensed an impact against a pedestrian. When an impact against a pedestrian is detected, the actuating circuit also actuate later-described actuators 23 of the hood lifting devices 20 generally simultaneously with the inflator 28 to lift the rear end 10c of the hood 10 (Fig. 11) in order that a clearance is formed between the rear end 10c of the hood 10 and a cowl 7 for allowing airbag emergence.

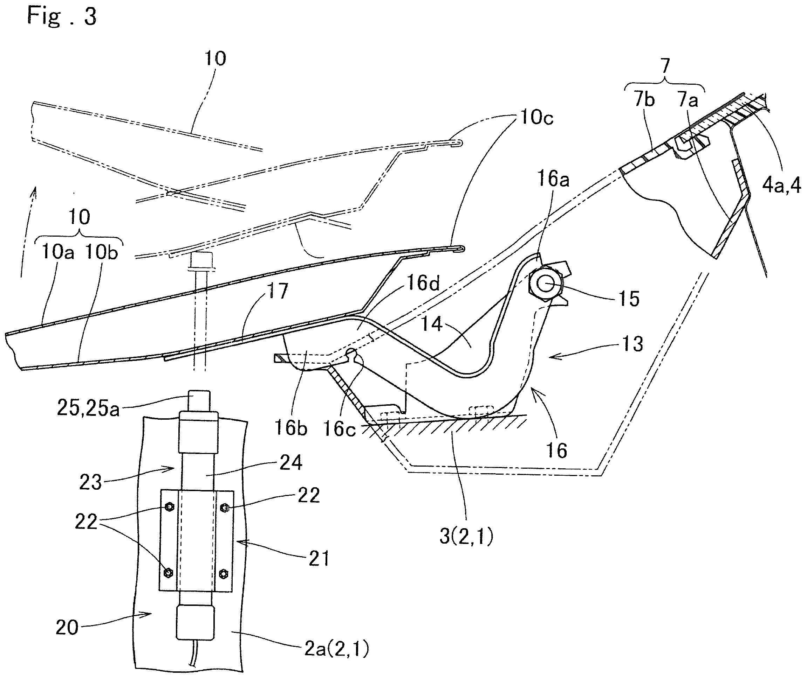

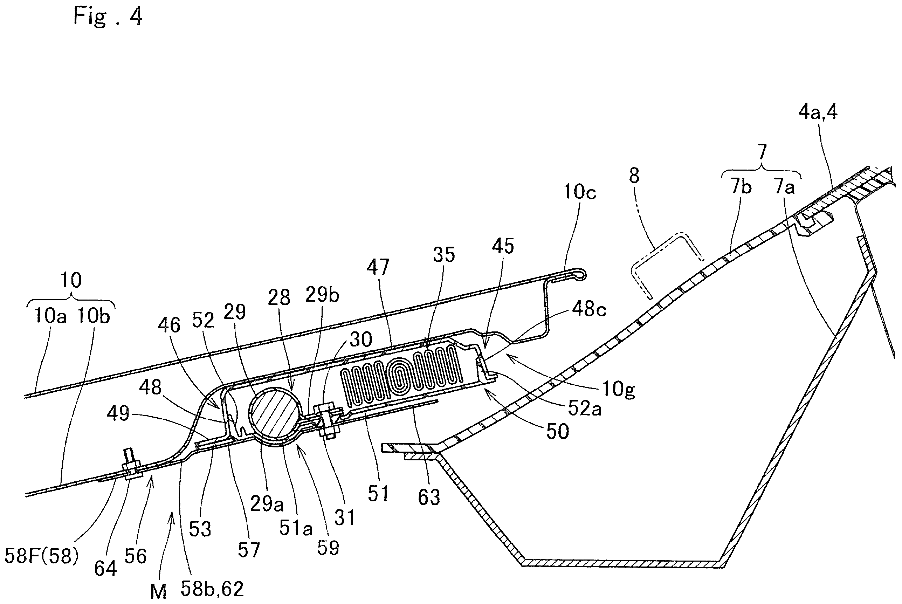

As shown in Fig. 1, the hood 10 covers an engine room ER of the vehicle V and is joined to the body structure 1 of the vehicle V with hinge sections 13 located at left edge 10d and right edge 10e of the rear end 10c so as to be openable forward. The hood 10 of the embodiment is fabricated of plate material or the like of steel or aluminum (aluminum alloy), and is composed of an outer panel 10a, which forms the top face, and an inner panel 10b, which forms the lower face and is greater in strength than the outer panel 10a, as shown in Figs. 3 to 6. As shown in Figs. 1 and 2, in order to fit a later-described front windshield 4, the rear end 10c of the hood 10 is so designed in shape as to curve relative to a left and right direction such that the center in a left and right direction is located forward whereas left and right end regions are located rearward. As shown in Figs. 4 to 6, the hood 10 includes on the backside of a central region in a left and right direction at the rear end 10c (on the inner panel 10b) a recessed region 10g where the airbag device M is mounted.

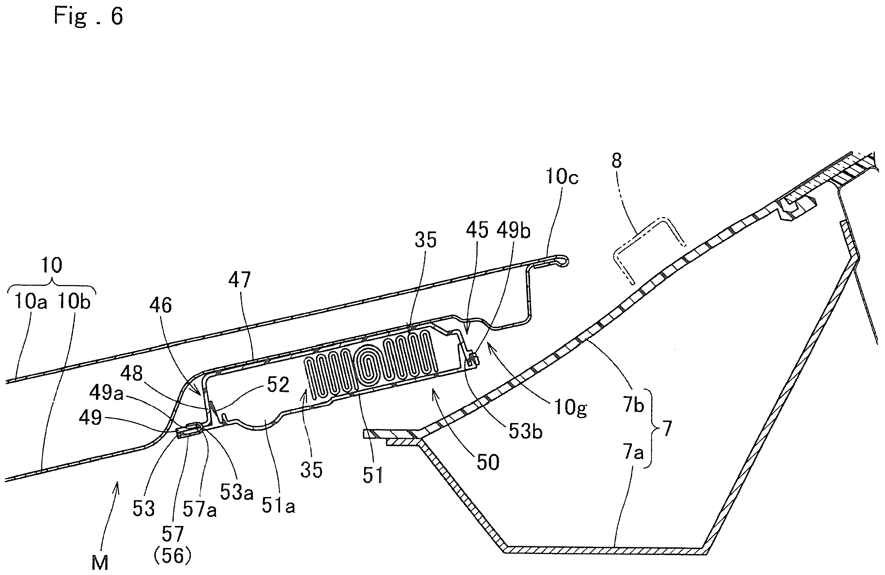

As shown in Figs. 3, 4 and 6, at the rear of the hood 10 is a cowl 7 that is composed of a cowl panel 7a, which has high rigidity and belongs to the vehicle body structure 1, and a cowl louver 7b disposed above the cowl panel 7a and is fabricated of synthetic resin. The cowl louver 7b is continuous at the rear end with a lower region 4a of the front windshield 4. The cowl 7 is also shaped along the curvature of the rear end 10c of the hood 10 to curve relative to a left and right direction such that the center in a left and right direction is located forward whereas left and right end regions are located rearward (Fig. 1). As shown in Fig. 1, a pair of wipers 8 are provided on the cowl 7. As indicated by double-dotted lines in Figs. 4 and 6, the wipers 8 are so provided as to protrude upward from the cowl louver 7b. Front pillars 5L and 5R are located on the left and right of the front windshield 4, as shown in Fig. 1. Although the hood 10 is pushed up at the rear end 10c as shown in Fig. 11 when the hood lifting devices 20 are actuated, the front end 10f of the hood 10 stays engaged with the vehicle body structure 1 since a latch mechanism holds a normally-closing hood lock striker disposed at the front end 10f.

The hinge sections 13 are located at the left edge 10d and right edge 10e of the rear end 10c of the hood 10 (Figs. 1 and 2), and are provided with a hinge base 14 and a hinge arm 16 secured to the hood 10, respectively, as shown in Figs. 2 and 3. Each of the hinge bases 14 is secured to a mounting flange 3 mounted on a hood ridge reinforcement 2, which is part of the vehicle body structure 1. As shown in Fig. 3, each of the hinge arms 16 is formed of an angle material of sheet metal shaped into a generally semicircular arc protruding downwardly. The root end 16a of the hinge arm 16 is rotatably joined to the hinge base 14 with the aid of a support shaft 15. As shown in Fig. 3, each of the hinge arms 16 includes on the leading end 16b facing away from the root end 16a a joint plate 17 which extends from the leading end 16b generally along the underside of the hood 10. The joint plate 17 is jointed to the underside of the rear end 10c of the hood 10 by welding or the like. As shown in Fig. 3, a generally round cavity 16c is formed on the lower edge in a vicinity of the leading end 16b of each of the hinge arms 16. The region around the cavity 16c serves as a plastic deformation portion 16d that is plastically deformable for allowing the rise of the rear end 10c of the hood 10 when piston rods 25 of the actuators 23 of the hood lifting devices 20 push up the rear end 10c of the hood 10 (Fig. 11). As shown in Figs. 2 and 3, the support shafts 15 are so arranged that the axial direction extends along a left and right direction of the vehicle V. As indicated by double-dotted lines in Fig. 3, the hood 10 opens forward around the support shaft 15 by lifting the front end 10f (Fig. 1) of the hood 10.

As shown in Figs. 1 to 3, the hood lifting devices 20 are located on the left and right of the airbag device M, beneath the hinge sections 13 and below the left edge 10d and rear edge 10e of the rear end 10c of the hood 10. As shown in Fig. 3, each of the hood lifting devices 20 includes an actuator 23 and a mounting bracket 21 for mounting the actuator 23 on the hood ridge reinforcement 2 (i.e., on the vehicle body structure 1). The mounting bracket 21 has a generally U-shaped sectional shape for holding the actuator 23 and is bolt 22 secured to a mounting flange 2a provided on the hood ridge reinforcement 2. Each of the actuators 23 includes a not-shown gas generator as the driving force, a cylinder 24 held by the mounting bracket 21 and a piston rod 25 stored inside the cylinder 24 for upward deployment out of the cylinder 24. The gas generator is stored at the bottom of the cylinder 24. The actuator 23 is so designed as to launch a not-shown piston of the piston rod 25 with a gas that the gas generator generates. If the actuator 23 is actuated, the top 25a of the piston rod 25 is deployed upward and abuts against the underside of the joint plate 17 provided proximate the leading end 16b of the hinge arm 16 located on the underside of the rear end 10c of the hood 10. That is, the tops 25a of the piston rods 25 lift the rear end 10c of the hood 10 as shown in Fig. 11, thereby forming a clearance between the cowl 7 and the rear end 10c of the hood 10 for allowing airbag emergence.

Referring to Figs. 2, 4 to 9, the airbag device M includes an airbag 35, an inflator 28 that feeds an inflation gas to the airbag 35, a case 45 that houses the airbag 35 and inflator 28, and a mounting bracket 56 that supports the inflator 28 and mounts the inflator 28 on the hood 10.

As shown in Figs. 2, 8 and 9, the airbag device M of the illustrated embodiment includes two inflators 28 arranged along a left and right direction. Each of the inflators 28 is generally cylindrical in shape and so arranged that the axial direction extends along a left and right direction. More specifically, each of the inflators 28 includes at the first end in a left and right direction (at an end facing outwardly in a left and right direction, in the illustrated embodiment) not-shown gas discharge ports for discharging an inflation gas, and is electrically connected to the actuation circuit through a not-shown lead wire extending from the second end (an end facing inwardly) in a left and right direction.

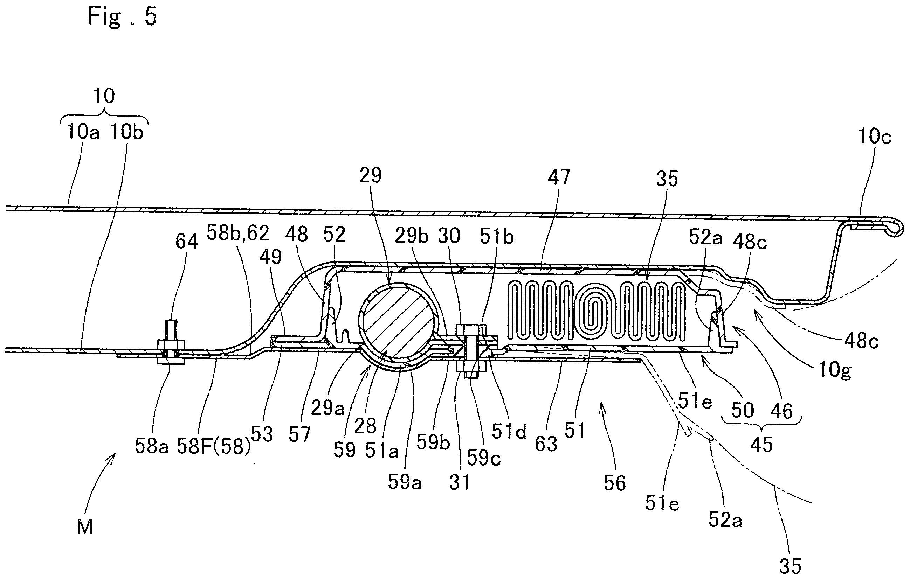

As shown in Figs. 2, 4 and 5, each of the inflators 28 is mounted on the case 45 and mounting bracket 56 with the aid of brackets 29 and bolts 30 and nuts 31 which serve as fixing means for fixing the brackets 29 to a later-described inflator holding section 59 of the mounting bracket 56. Each of the brackets 29 is composed of a band-shaped sheet metal and includes a generally annular grip section 29a holding the inflator 28 and a fixing section 29b extending from opposite ends of the grip section 29a. A bolt 30 protrudes out of the fixing section 29b, and the bolt 30 is run through a later-described lower case 50 of the case 45 and a later-described mount plate 59b of the inflator holding section 59 of the mounting bracket 56, and nut 31 fixed under the mount plate 59b, thus the bracket 29 as grips (holds) the inflator 28 by the grip section 29a is secured to the inflator holding section 59 of the mounting bracket 56 by the fixing section 29b together with the case 45. In the illustrated embodiment, each of the inflators 28 is provided with two brackets 29 at positions spaced-apart in an axial direction (Figs. 2, 8 and 9). The first ends (the ends facing outwardly in a left and right direction) having the gas discharge ports of the inflators 28 are jointed with later-described joint ports 38 of the airbag 35 with the aid of clamps 32. In the illustrated embodiment, as shown in Figs. 4 and 5, the inflators 28 are stored in a front region of the case 45 and fixed to the mounting bracket 56 such that the fixing sections 29b (and bolts 30 and nuts 31) are located at the rear of the inflators 28.

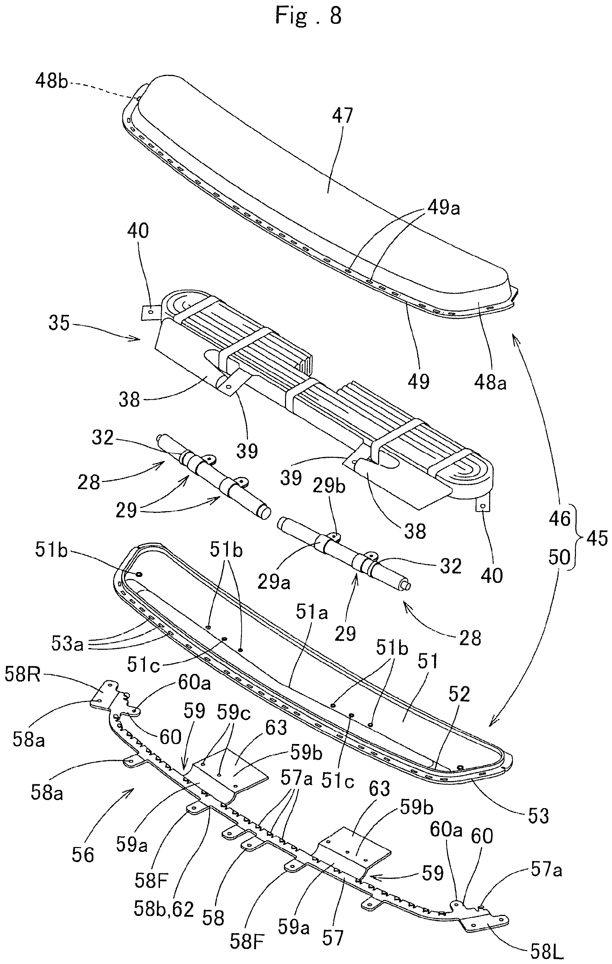

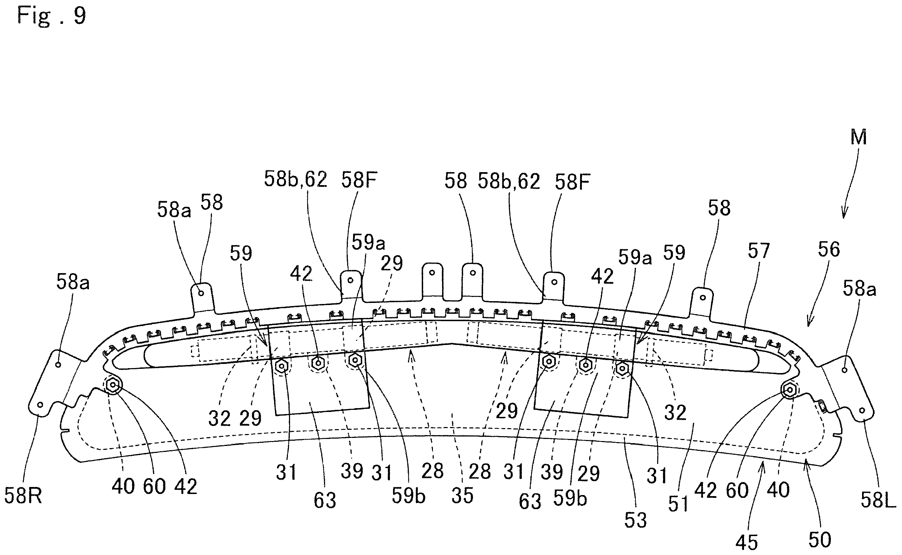

The airbag 35 is inflatable with an inflation gas fed from the inflators 28 and emerges out of the case 45 and deploys rearward and upward. The airbag 35 of the illustrated embodiment is fabricated of a fabric woven of polyester yarn, polyamide yarn or the like. As indicated by double-dotted lines in Fig. 1, the airbag 35 is inflatable into a generally U shape elongated in a left and right direction as viewed from the front. The airbag 35 includes a cowl cover portion 36 that is deployable generally along a left and right direction in such a manner as to cover the cowl 7 and a pair of pillar cover portions 37 that extend rearward from left and right ends of the cowl cover portion 36 and cover lower regions 5a of the front pillars 5L and 5R. The airbag 35 further includes at the front edge of the cowl cover portion 36 joint ports 38 for joint with the inflators 28, center tethers 39 and end tethers 40 that mount the airbag 35 on the case 45 (Fig. 8). In the illustrated embodiment, although not depicted so in detail, the center tethers 39 are disposed at two positions inward of and proximate the joint ports 38 in a left and right direction, and the end tethers 40 are located proximate left and right ends of the cowl cover portion 36. Each of the center tethers 39 and end tethers 40 is fixed to the mount plate 59b or a tether mount section 60 of the mounting bracket 56 together with the lower case 50 (Figs. 8 and 9). As shown in Figs. 4 to 6, the airbag 35 is stored in a region at the rear of the inflators 28 in the case 45 in a folded-up configuration (Fig. 8). Although there seems to be a gap between the airbag 35 and inflator 28 in Figs. 4 and 5, the airbag 35 is in fact tightly stored in the region at the rear of the inflator 28 without a gap up to the region on the fixing section 29b of the bracket 29 and bolt 30.

The case 45 is fabricated from a material with less rigidity than the mounting bracket 56 and is formed from synthetic resin into a box. In the illustrated embodiment, the case 45 is fabricated of soft synthetic resin such as thermoplastic elastomer of polyolefin (TPO). As shown in Figs. 4 to 8, the case 45 is composed of an upper case 46 and a lower case 50 so as to cover the airbag 35 and inflators 28 entirely. As shown in Figs. 1 and 2, the case 45 is so designed in shape as to curve relative to a left and right direction along the curvature of the rear end 10c of the hood 10 such that the center in a left and right direction is located forward whereas left and right end regions are located rearward.

The upper case 46 includes a ceiling wall 47 which covers the airbag 35 in a folded-up configuration and the inflators 28 from above, a generally square tubular circumferential wall 48 extending downward from the peripheral edge of the ceiling wall 47 and a flange 49 which extends outwardly in four directions from the lower end of the circumferential wall 48. In the illustrated embodiment, the left wall 48a and right wall 48b of the circumferential wall 48, which are located on the opposite sides in a left and right direction of the circumferential wall 48, are inclined in such a manner as to spread toward the rear, as shown in Figs. 2 and 8. The flange 49 is formed along an entire circumference of the circumferential wall 48. The flange 49 includes at the left region, front region and right region numerous retaining holes 49a for receiving retaining hooks 57a of the mounting bracket 56 as shown in Figs. 6 to 8. At the rear region of the flange 49, there are formed a plurality of insert sections 49b which interspatially protrude downward to be inserted into later-described recesses 53b formed on a flange 53 of the lower case 50, as shown in Fig. 6.

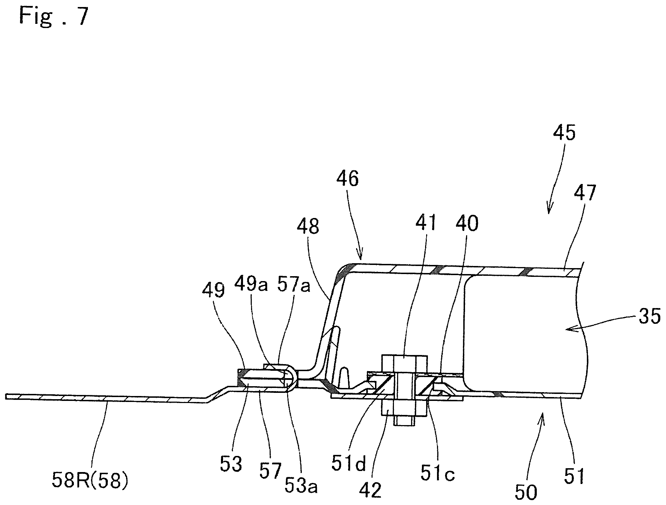

The lower case 50 includes a bottom wall 51 which covers the undersides of the airbag 35 and inflators 28, an inner wall 52 extending upward from the peripheral edge of the bottom wall 51, and a flange 53 which extends outwardly in four directions in such a manner as to continue from the bottom wall 51. At the front end region of the bottom wall 51 is an inflator storage region 51a which slightly dents (protrudes downwardly) in the shape of an outer circumference of the inflators 28, as shown in Figs. 4 and 5. In the illustrated embodiment, the inflator storage region 51a is formed over a generally entire area in a left and right direction of the bottom wall 51 as shown in Figs. 8 and 9. As shown in Fig. 8, the bottom wall 51 includes through holes 51b for receiving the bolts 30 used for mounting of the brackets 29 of the inflators 28 and through holes 51c for receiving the bolts 41 used for mounting of the center tethers 39 and end tethers 40. Each of the through holes 51b and 51c is provided with a packing 51d for securing waterproofing property (Figs. 5 and 7). The inner wall 52 is so designed as to cover the inner circumferential plane of the circumferential wall 48 of the upper case 46 in a tight fashion, and its height (protruding amount out of the bottom wall 51) is about half of the height of the circumferential wall 48. That is, the inner wall 52 having a great protruding amount out of the bottom wall 51 is disposed in close contact with the inner circumferential plane of the circumferential wall 48. The flange 53 abuts against the flange 49 of the upper case 46 when the lower case 50 is lidded with the upper case 46. The flange 53 is formed over an entire circumference of the inner wall 52. As shown in Figs. 6 to 8, the flange 53 also includes at the left region, front region and right region numerous retaining holes 53a for receiving the retaining hooks 57a of the mounting bracket 56 at positions corresponding to the retaining holes 49a of the flange 49 of the upper case 46. At the rear region of the flange 53, there are formed a plurality of recesses 53b for receiving the insert sections 49b formed on the flange 49 of the upper case 46, as shown in Fig. 6.

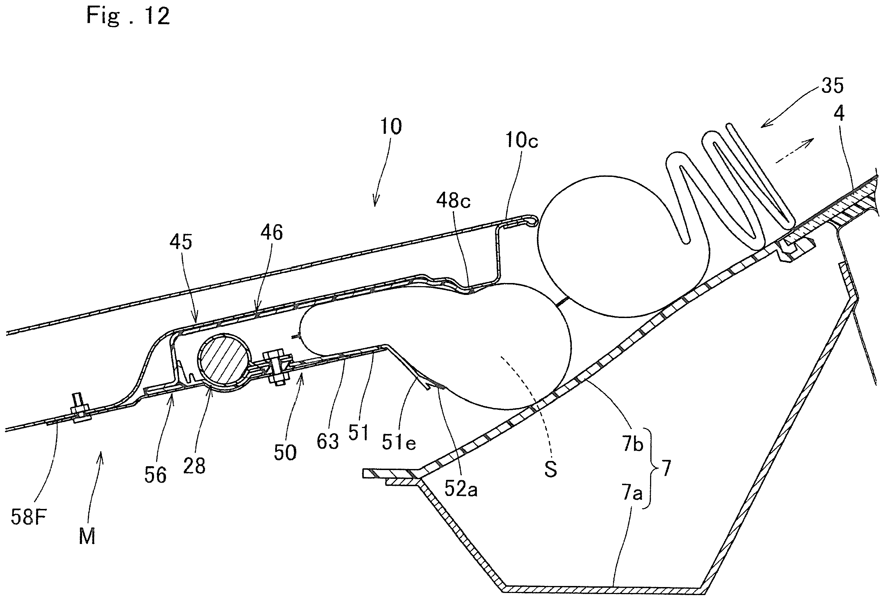

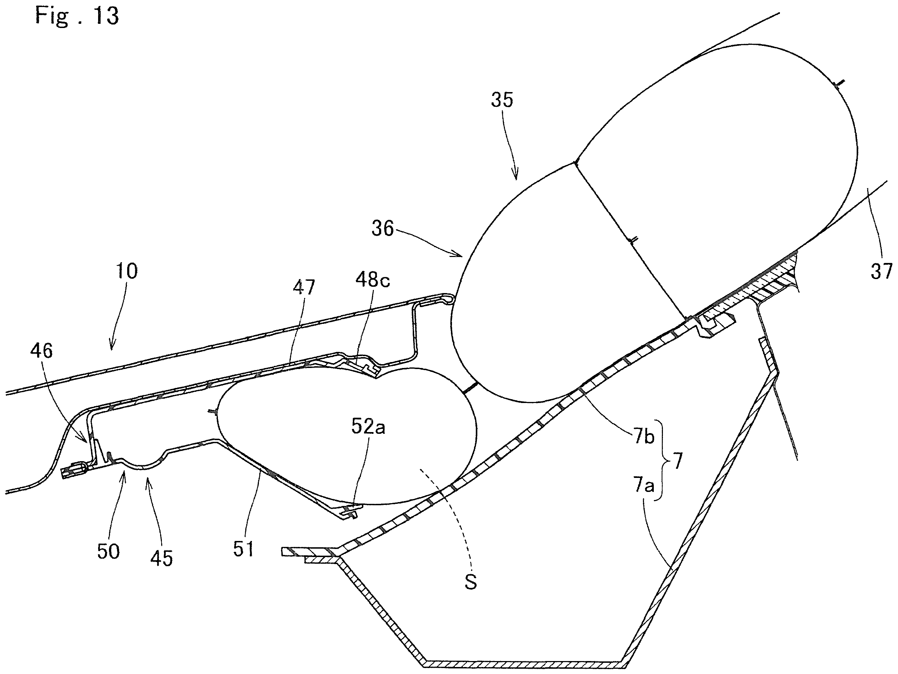

With the case 45 of the illustrated embodiment, if the upper case 46 is placed over the lower case 50 which the airbag 35 and inflators 28 are set in, the airbag 35 and inflators 28 are stored inside the case 45 in a wholly covered fashion. When the inflators 28 are actuated and the airbag 35 inflates with an inflation gas, the airbag 35 pushes and deforms the rear wall 48c of the circumferential wall 48 of the upper case 46 and a rear region 52a of the inner wall 52 of the lower case 50, and the rear wall 48c and inner wall 52 open rearward and form a gap S (or emergence opening), thus allowing the airbag 35 to deploy rearward and upward, as shown in Figs. 12 and 13. At airbag deployment, a rear region 51e of the bottom wall 51 of the lower case 50 is also pushed by the airbag 35 and deformed, as shown in Fig. 12.

The mounting bracket 56 is made of sheet metal, and is disposed outside of and beneath the case 45, as shown in Figs. 4, 5 and 9. As shown in Figs. 8 to 10, the mounting bracket 56 includes a support frame 57 which is disposed at the front end region and beneath the flanges 49 and 53 of the upper case 46 and lower case 50, a plurality of mounting sections 58 used for mounting of the mounting bracket 56 on the hood 10, two inflator holding sections 59 for supporting the inflators 28, a displacement allowing section 62 formed between the inflator holding section 59 and the mounting section 58 and a pair of tether mount sections 60 to which the leading ends of the end tethers 40 of the airbag 35 are attached.

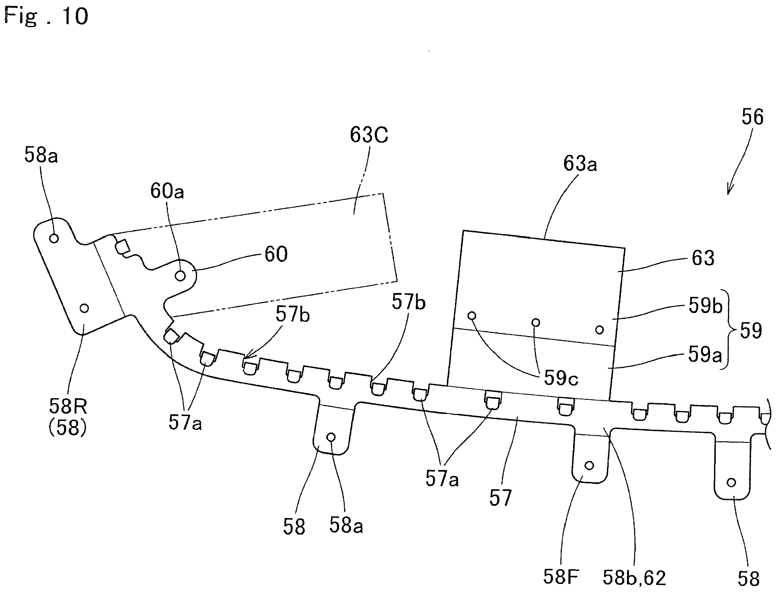

The support frame 57 is formed into a band-shaped plate elongated generally along a left and right direction. More specifically, the support frame 57 is disposed over a generally entire area in a left and right direction of the front end region of the case 45, and is shaped generally along the front edge of the case 45 while curving such that the left and right ends face rearward. The support frame 57 includes numerous retaining hooks 57a for retaining the case 57. The retaining hooks 57a are interspatially formed over a generally entire area in a left and right direction of the support frame 57. Each of the retaining hooks 57a is formed by cutting and raising a part of the rear edge of the support frame 57, into such a shape as to have a generally J shaped sectional shape extending upward from a vicinity of the rear edge of the support frame 57 and bent forward at the leading end. That is, by cutting and raising the retaining hooks 57a, numerous recessed regions 57b are formed at the rear edge of the support frame 57 (Fig. 10). Each of the retaining hooks 57a is inserted into the retaining holes 49a and 53a formed on the flanges 49 and 53 of the upper case 46 and lower case 53 and retained by peripheries of the retaining holes 49a and 53a (Figs. 6 and 7).

Each of the mounting sections 58 used for mounting the mounting bracket 56 on the hood 10 is formed into a flat plate protruding forward partially out of the front edge of the support frame 57. The mounting sections 58 are interspatially arranged over a generally entire area in a left and right direction of the support frame 57. In the illustrated embodiment, eight mounting sections 58 are provided, and the mounting sections 58L and 58R positioned at opposite ends in a left and right direction of the support frame 57 have a greater width in a left and right direction (in a length direction of the support frame 57) than other mounting sections. Each of the mounting sections 58 (58L and 58R) has an insert hole 58a for receiving a bolt 64 which secures the mounting section 58 to the backside of the inner panel 10b of the hood 10, as shown in Figs. 4 and 5.

Each of the inflator holding sections 59 are formed at two positions corresponding to the inflators 28 in such a manner as to protrude rearward from the support frame 57. In the illustrated embodiment, each of the inflator holding sections 59 has a width in a left and right direction about one third of the length of the inflator 28 (Figs. 2, 8 and 9), and supports the underside of the central region in an axial direction of the inflator 28. As shown in Figs. 4, 5, 8 and 10, each of the inflator holding sections 59 includes a seat section 59a which curves along the shape of the inflator storage region 51a of the lower case 50 in such a manner as to protrude downward and a mount plate 59b which extend rearward from the rear edge of the seat section 59a. The inflators 28 are mounted on the mount plates 59b. The seat sections 59a support the undersides of the inflators 28 from the outside of the inflator storage region 51a. Each of the mount plates 59b has a generally same width in a left and right direction as each of the seat sections 59a, and extends rearward from the seat section 59a. Each of the mount plates 59b is provided with through holes 59c for receiving the bolts 30 for fixing the fixing sections 29b of the brackets 29 and bolts 41 for attachment of the center tether 39 (Fig. 10). The fixing sections 29b of the brackets 29 as hold the inflators 28 and leading ends of the center tethers 39 of the airbag 35 are fixed to the mount plates 59b with the aid of the bolts 30, 41 and nuts 31 and 42, as shown in Figs. 4, 5 and 9. In the illustrated embodiment, the leading end of each of the center tethers 39 is fixed to a position between the fixing sections 29b, as shown in Fig. 9.

As shown in Figs. 8 to 10, the tether mount sections 60 extend from the rear edge of the support frame 57. The tether mount sections 60 of the illustrated embodiment are located at the rear of the mounting sections 58L and 58R disposed at left and right ends of the support frame 57. Each of the tether mount sections 60 is provided with a through hole 60a for receiving the bolt 41, which, in cooperation with the nut 42, fixes the leading end of the end tether 40 of the airbag 35 to the tether mount section 60.

The mounting bracket 56 of the illustrated embodiment further includes a guide plate 63 that helps deploy the airbag 35 rearwardly and upwardly. The guide plate 63 covers the underside of the airbag 35 and helps deploy the airbag 35 rearwardly as the airbag 35 inflates with an inflation gas and emerges from the case 45. The guide plate 63 of the illustrated embodiment is formed into a generally plate extending rearward from the inflator holding section 59. In the illustrated embodiment, the guide plate 63 has a generally same width in a left and right direction as the inflator holding section 59 (Figs. 8 to 10) and extends rearwardly from the mount plate 59b of the inflator holding section 59 in a continuous fashion, and is disposed beneath the lower case 45 in such a fashion as to leave a clearance between itself and the bottom wall 51 of the case 45 and cover the underside of the airbag 35, as shown in Figs. 4 and 5. Further, the guide plate 63 is so designed as to extend generally in parallel to the inner panel 10b of the hood 10 as the airbag device M is mounted on board, as shown in Figs. 4 and 5. In the illustrated embodiment, the rear edge 63a of the guide plate 63 is positioned farther forward than the rear end of the case 45 and the guide plate 63 covers an about two third area of the underside of a region of the case 45 where the airbag 35 is stored. In the illustrated embodiment, the guide plates 63 are located, partially, at only two positions at the rear of the inflator holding sections 59 so as not to cover the underside of the case 45 entirely. In other words, as shown in Figs. 2 and 9, the guide plates 63 have a smaller projected area than the case 45 in a projection view from an up and down direction and support the underside of the airbag 35 partially. The guide plates 63 are located at two, interspaced positions in a left and right direction. In other words, the two guide plates 63 have in between them a void space which separates the rear edges 63a, as viewed from an up and down direction. Although a small clearance is formed between the guide plate 63 and bottom wall 51 of the case 45, the guide plate 63 is designed to support the underside of the case 45 at airbag deployment.

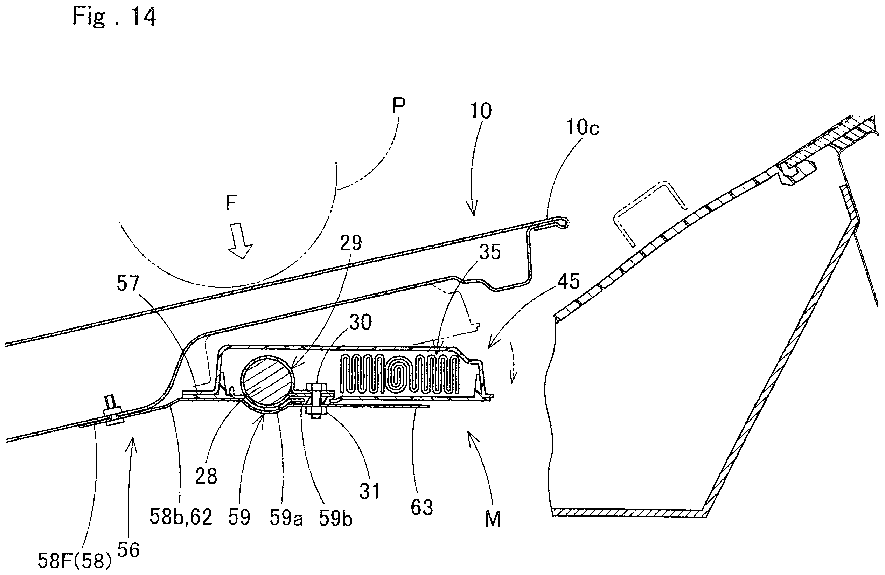

In the mounting bracket 56 of the illustrated embodiment, the mounting sections 58 secured to the hood 10 and the inflator holding sections 59 holding the inflators 28 protrude partially from the support frame 57 and extend forward and rearward, respectively, in such a manner as to sandwich the support frame 57. That is, the mounting bracket 56 mounts the airbag device M to the hood 10 in a cantilever fashion with the mounting sections 58 protruding forward from the front edge of the support frame 57 while supporting the underside of the case 45 housing the airbag 35 and inflators 28 by the support frame 57 and inflator holding sections 59. With this configuration, if a strong downward force acts on a vicinity of the inflator 28, the region between the mounting section 58 and inflator holding section 59 is bent and the inflator holding section 59 is displaced downward together with the inflator 28. In particular, the mounting bracket 56 includes in front of the inflator holding sections 59 and at an inward position in a left and right direction relative to the inflator holding sections 59 a mounting section 58F which protrudes out of the support frame 57, a portion 58b in a vicinity of the root region of the mounting section 58F (a portion 58b located at the border of the support frame 57 and mounting section 58F) serves as a displacement allowing section 62 that allows the inflator holding section 59 to move downward. When a strong downward force acts on a vicinity of the inflator 28, the mounting bracket 56 is bent at the displacement allowing section 62 (at the root region 58b of the mounting section 58F) such that the inflator holding section 59 is displaced downward together with the inflator 28 as shown in Fig. 14. At this time, although not depicted in detail, a region of the support frame 57 adjacent the mounting section 58F (a region of the support frame 57 located between the mounting section 58F and inflation holding section 59) is also deformed in a twisting fashion along with the bending deformation of the displacement allowing section 62 such that the inflator holding section 59 is displaced downward.

Mounting of the airbag device M on the vehicle V is now described. Firstly, the airbag 35 is folded up for storage in the case 45 as shown in Fig. 8, and a tearable wrapping member is wrapped around the airbag 35 for keeping the folded-up configuration. The brackets 29 are attached to the inflators 28, and the inflators 28 are jointed with the joint ports 38 of the airbag 35 with the clamps 32. Then the airbag 35 and the inflators 28 are placed on the bottom wall 51 and stored in the lower case 50. The bolts 30 protruding out of the fixing sections 29b of the brackets 29 holding the inflators 28 are inserted into the through holes 51b of the bottom wall 51 while the bolts 41 protruding out of the leading ends of the center tethers 39 and end tethers 40 of the airbag 35 are inserted into the through holes 51c. Thereafter, the lower case 50 is lidded with the upper case 46. Subsequently, the retaining hooks 57a are inserted into the retaining holes 49a and 53a so as to be retained by peripheries of the retaining holes 49a and 53a and the mounting bracket 56 is placed beneath the lower case 50 by putting the bolts 30 and 41 protruding out of the lower case 50 through the through holes 59c and 60a. If then the bolts 30 and 41 protruding out of the mount plates 59b and tether mount sections 60 are fastened with the nuts 31 and 42, the inflators 28 and the airbag 35 are mounted on the mounting bracket 56 with interposition of the case 45, thus forming an airbag module. Subsequently, the mounting sections 58 of the mounting bracket 56 are bolt 64 fastened with the inner panel 10b of the hood 10. Thus the airbag device M is mounted on the backside of the hood 10. If then the inflators 28 are electrically connected to the not-shown actuation circuit, the airbag device M is mounted on the vehicle V.

With the airbag device M of the foregoing embodiment, when the actuation circuit detects an impact against a pedestrian based on a signal fed from the sensor mounted on the front bumper 6, the actuators 23 of the hood lifting device 20 will be actuated so the piston rod 25 push up the rear end 10c of the hood 10 as shown in Fig. 11, such that an emergence opening is formed between the rear end 10c of the hood 10 and the cowl 7. Generally simultaneously, the inflators 28 will be actuated and inflate the airbag 35, and the airbag 35 will push and open the rear wall 48c and the rear region 52a of the case 45 and emerge therefrom, then protrudes rearwardly and upwardly and cover the upper surface of the cowl 7 and the front surfaces of the front pillars 5L and 5R, as shown in Figs. 1 and 13.

In the airbag device M of the foregoing embodiment, the mounting bracket 56 holds the inflators 28 and mounts the airbag 35 and inflators 28 on the hood 10 as well. However, the mounting bracket 56 includes between the inflator holding section 59 holding the inflator 28 and the mounting section 58 secured to the hood 10 a displacement allowing section 62 that allows the inflator holding section 59 and its vicinity to be displaced downward. With this configuration, if, as shown in Fig. 14, a pedestrian P contacts a region of the hood 10 in the vicinity of the inflator 28 and applies a strong downward force F on the region, the displacement allowing section 62 (the root region 58b of the mounting section 58F) will be plastically deformed and bent, thus allowing the inflator 28 and the inflator holding section 59 to be displaced downward. The airbag device M of the illustrated embodiment is stored in the recessed region 10g which is formed by denting the inner panel 10b from the backside as shown in Fig. 6. In other words, the region of the hood 10 where the inflators 28 are disposed is thinner than other regions of the hood 10 and the airbag device M is located in a region close to the outer panel 10a and the pedestrian P. However, the airbag device M is able to move the inflator 28 and inflator holding section 59 downward when a downward strong force F acts on the vicinity of the inflators 28, thereby protecting the pedestrian P in a smooth fashion. As a consequence, the airbag device M of the foregoing embodiment will not give a great reaction force to the pedestrian P when he contacts the region in the vicinity of the inflator 28.

Therefore, the airbag device M of the embodiment will not give a great reaction force to the pedestrian P when he contacts a region of the vehicle V around which the inflator 28 is located.

In the airbag device M of the foregoing embodiment, the mounting bracket 56 is located outside of (on the underside of) the case 45 and the inflator holding sections 59 support the inflators 28 from the outside of the case 45 (with the lower case 50 of the case 45 interposed between them). This configuration will ensure waterproofing property of the case 45 since the mounting bracket does not protrude partially out of the case.

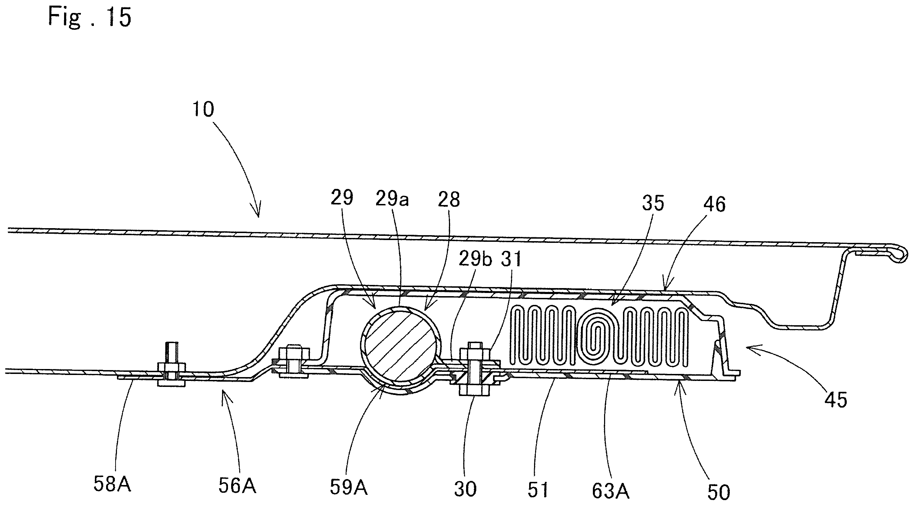

Without a consideration of waterproofing property of the case, the airbag device may be configured as depicted in Fig. 15. In this modification, the mounting bracket 56A is disposed inside the case 45 and lets the mounting section 58A out of the case 45 such that the inflator holding section 59A directly supports the inflator 28, without interposition of the case 45. The guide plate 63A is disposed between the airbag 35 in a folded-up configuration and the bottom wall 51. However, it is more desirable to locate the mounting bracket beneath the case 45 as in the foregoing embodiment from the viewpoint of waterproofness of the case 45. In the case 45 of the airbag device M described above, as shown in Figs. 4 to 6, the circumferential wall 48 of the upper case 46 extends up to a vicinity of the bottom wall 51 of the lower case 50, and the inner wall 52 of the lower case 50, whose height is about half of that of the circumferential wall 48, is disposed in close contact with the inner circumferential plane of the circumferential wall 48. Further, the flange 49 extending from the circumferential wall 48 and the flange 53 of the lower case 50 abut against each other in a lower region of the case 45, in a vicinity of the bottom wall 51. Thus the case 45 has an enhanced waterproofing property and is able to prevent intrusion of rainwater or the like as much as possible when mounted on board.

In the airbag device M, the fixing sections 29b of the brackets 29 holding the inflator 28 and the bolts 30 and nuts 31 (i.e., the fixing means) which fix the fixing sections 29b to the mount plate 59b of the inflator holding section 59 are located at the rear of each of the inflators 28. This configuration will enable the inflators 28 to be located proximate the front end of an inner space of the case 45, i.e., in proximity to the circumferential wall 48, and thus allow a storing space for the airbag 35 at the rear of the inflators 28, including a region above the bolts 30 and fixing sections 29. Therefore, the airbag 35 can be stored in a region above the bolts 30 and fixing sections 29 as well, which will contribute to making the case 45 more compact.

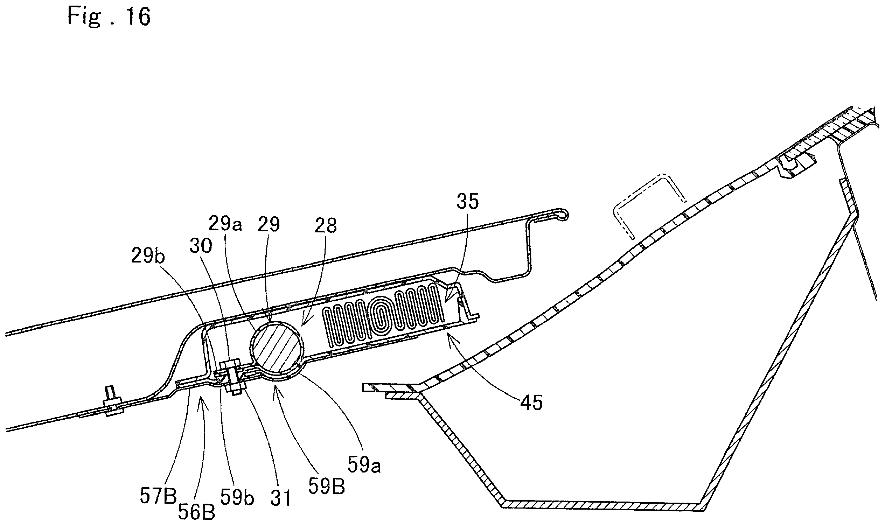

If plenty of storing space is allowed, as an airbag device depicted in Fig. 16, the fixing section 29b of the bracket 29 holding the inflator 28 and the bolts 30 and nuts 31 which fix the fixing section 29b to the inflator holding section 59B of the mounting bracket 56B may be located in front of the inflator 28. In the inflator holding section 59B of such mounting bracket 56B, the mount plate 59b on which the fixing section 29b is mounted is located towards the support frame 57B, i.e., toward the front, while the seat section 59a supporting the underside of the inflator 28 is located towards the rear.

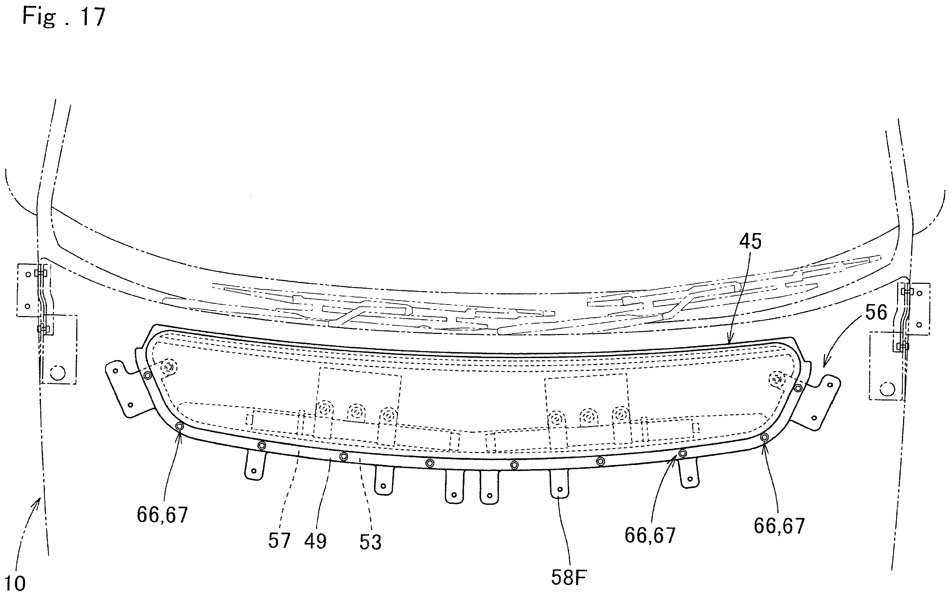

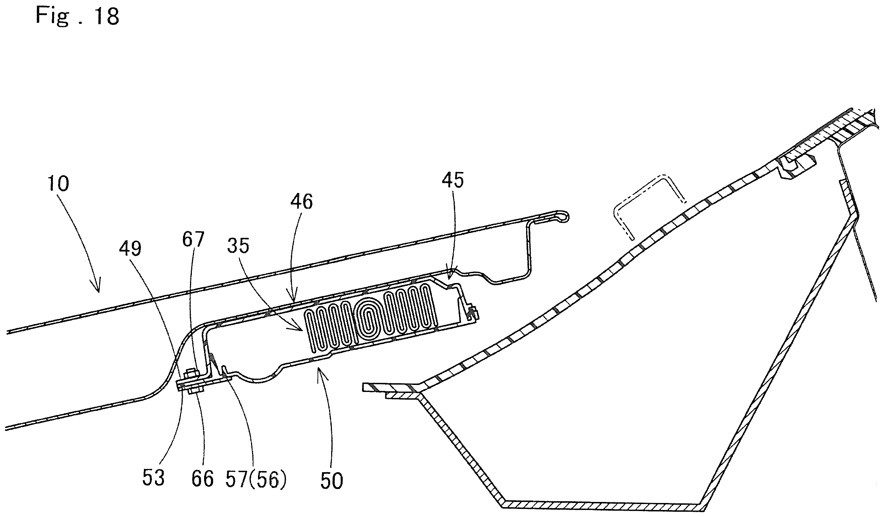

The case 45 of the airbag device M is assembled with the mounting bracket 56 by engagement of the retaining hooks 57a formed on the support frame 57 with the peripheries of the retaining holes 49a and 53a formed on the flanges 49 and 53 of the upper case 46 and lower case 50 of the case 45. However, the engagement of the case 45 with the mounting bracket 56 should not be limited thereby. By way of example, as shown in Figs. 17 and 18, the case 45 may be assembled with the mounting bracket 56 with the aid of a plurality of bolts 66 and nuts 67 which fix the flanges 49 and 53 of the upper case 46 and lower case 50 to the support frame 57 of the mounting bracket 56 at more than one positions in a left and right direction.

Since the case 45 of the airbag device M is fabricated of synthetic resin, the case 45 has an adequate shape retention property. When, as in the airbag device M, the case 45 is composed of two parts (i.e., the upper case 46 and lower case 50) and the upper case 46 and lower case 50 are assembled with the aid of engagement of the insert sections 49b formed on the flange 49 of the upper case 46 and the recesses 53b formed on the lower case 50 such that the insert sections 49b and recesses 53b are disengaged upon airbag deployment and the airbag 35 housed therein emerges from the opening formed by disengagement of the insert sections 49b and recesses 53b, the above configuration will be conducive to maintaining the engagement between the insert sections and recesses and watertight structure and waterproofness of the case 45. If such an advantageous effect does not have to be considered, the case may be fabricated from rubber material or the like.

In the airbag device M, the mounting bracket 56 is movable (displaced) downward with the aid of plastic bending deformation of the displacement allowing section 62. However, the mode of deformation of the displacement allowing section should not be thereby, but may also be a fracture (or break), an elastic deformation or the like, on condition that the inflator holding section can be displaced downward so as to suppress a reaction force given to a pedestrian.

The mounting brackets 56, 56A and 56B in the foregoing embodiments hold the inflator 28 in such a manner as to cover the underside of the inflator 28. However, the mode that the mounting bracket holds the inflator should not be limited thereby, but may be other configuration as long as the mounting bracket is mounted on the vehicle hood only by the mounting sections located at the front end in a cantilever fashion. By way of example, the mounting bracket may hold the inflator while covering an upper side of the inflator, or may hold the inflator while covering an entire circumference of the inflator.

In the airbag device M described above, the mounting bracket 56 securing the inflator 28 to the hood 10 includes the guide plate 63 that helps deploy the airbag 35 rearwardly. Accordingly, the airbag 35 having emerged from the case 45 will be smoothly deployed rearward as shown in Fig. 12.

Further, as shown in Figs. 8 and 9, the guide plate 63 of the airbag device M is disposed only at the rear region of each of the inflator holding sections 59 holding the inflators 28. That is, the guide plate 63 has a smaller projected area than the case 45 in a projection view from an up and down direction in such a manner as to support the underside of the airbag 35 partially (Fig. 9). This configuration will be conducive to material saving and weight and cost saving of the guide plate 63 in comparison with an instance where the guide plate covers an entire underside of the airbag. Without considering such an advantageous effect, the guide plate may be so configured as to cover the underside of the airbag in a folded-up configuration entirely.

In the airbag device M, the guide plate 63 of the airbag device M is disposed at two, interspaced positions in a left and right direction, at the rear region of each of the inflator holding sections 59. In other words, the two guide plates 63 have in between them a void space which separates the rear edges 63a, as viewed from an up and down direction. That is, since the guide plate 63 has no such a front edge as to oppose the airbag 35 deploying rearward, the airbag 35 will be prevented from being engaged with the guide plate 63 in an initial stage of deployment and be deployed quickly. Without considering such an advantageous effect, the guide plates may be so configured as to protrude inward in a left and right direction from left and right ends of the support frame, like a guide plate 63C indicated with double-dotted lines in Fig. 10. It is also conceivable to form each of the guide plates in a pectinate fashion and locate them interspatially along a left and right direction so as to cover the underside of the case, or to form a guide plate covering a generally entire underside of the case with numerous round or square voids.

In the airbag device M described above, the guide plate 63 has a higher rigidity than the case 45 and supports the underside of the case 45 at deployment of the airbag 35. Therefore, the guide plate 63 will support the underside of the case 45 at airbag deployment in a steady fashion and help deploy the airbag 35 rearward in a steady fashion with the aid of a region of the case 45 supported by the guide plate 63. More specifically, in the airbag device M, a region of the bottom wall 51 of the case 45 disposed between the interspatially-arranged guide plates 63 will be used to guide the deployment of the airbag 35, such that the airbag 35 will be deployed rearward smoothly with the aid of the region of the bottom wall 51 between the guide plates 63.

## Claims

1. A pedestrian protection airbag device (M) adapted to be mounted on a backside of and in a vicinity of a rear end (10c) of a hood (10) of a vehicle (V), the airbag device comprising:
an airbag (35) to be stored at the backside of the hood in a folded-up configuration;
an inflator (28) for feeding an inflation gas to the airbag; and
a case (45) disposed on the backside of the hood; the airbag device further includes a mounting bracket (56, 56A, 56B) that supports the in flator and mounts the airbag and the inflator on the hood; wherein the mounting bracket includes: an inflator holding section (59, 59A, 59B) that holds the inflator; and a mounting section (58, 58L, 58R, 58F, 58A) that is adapted to be secured to the hood; wherein the mounting bracket covers an underside of the airbag and includes a guide plate (63, 63C) that helps deploy the airbag rearwardly as the airbag inflates with the in flation gas. wherein the airbag (35) is stored in the case in a folded-up configuration and inflatable with an inflation gas for rearward deployment; the airbag is stored at the rear of the inflator in the case; and wherein the mounting bracket (56, 56A, 56B) supports the inflator and mounts the inflator on the hood, **characterized in that**:
the case (45) is composed of an upper case (46) and a lower case (50) so as to cover the airbag (35) and the inflator (28) entirely,
wherein the upper case (46) includes a ceiling wall (47) which covers the airbag (35) in a folded-up configuration and the inflator (28) from above, a generally square tubular circumferential wall (48) extending downward from the peripheral edge of the ceiling wall (47) and a flange (49) which extends outwardly in four directions from the lower end of the circumferential wall (48),
wherein the lower case (50) includes a bottom wall (51) which covers the undersides of the airbag (35) and inflator (28), an inner wall (52) extending upward from the peripheral edge of the bottom wall (51), and a flange (53) which extends outwardly in four directions in such a manner as to continue from the bottom wall (51);
wherein, when the inflator (28) is actuated and the airbag (35) inflates with an inflation gas, the airbag (35) pushes and deforms a rear wall (48c) of the circumferential wall (48) of the upper case (46) and a rear region (52a) of the inner wall (52) of the lower case (50), and the rear wall (48c) and inner wall (52) open rearward and form a gap (S), thus allowing the airbag (35) to deploy rearward and upward.

2. The pedestrian protection airbag device (M) of claim 1, wherein the guide plate (63, 63C) has a smaller projected area than the case (45) in a projection view from an up and down direction so as to support the underside of the airbag partially.

3. The pedestrian protection airbag device (M) of claim 2, wherein more than one said guide plates (63) are located at interspaced positions in a left and right direction and have in between them a void space which separates rear edges (63a) thereof, as viewed from an up and down direction.

4. The pedestrian protection airbag device (M) of any one of claim 1 to claim 3, wherein:
the case (45) is fabricated of a material with a shape retention property and has a watertight property, and is so configured as to allow an airbag emergence therefrom; and
the guide plate (63, 63C) has a higher rigidity than the case and supports an underside of the case at deployment of the airbag (35).

## Patentansprüche

1. Airbagvorrichtung (M) für einen Fußgängerschutz, die dazu angepasst ist, an einer Rückseite von und in einer Umgebung eines hinteren Endes (10c) einer Motorhaube (10) eines Fahrzeuges (F) montiert zu werden, welche Airbagvorrichtung aufweist:
einen Airbag (35), der in einer zusammengefalteten Konfiguration an der Rückseite der Motorhaube zu verstauen ist,
einen Gasgenerator (28) zum Zuführen eines Befüllungsgases für den Airbag, und
ein Gehäuse (45), das an der Rückseite der Motorhaube angeordnet ist,
welche Airbagvorrichtung ferner einen Montagebügel (56, 56A, 56B), der den Gasgenerator lagert und den Airbag und den Gasgenerator an der Motorhaube montiert, bei der der Montagebügel einen Gasgeneratorhalteabschnitt (59, 59A, 59B), der den Gasgenerator hält, und einen Montageabschnitt (58, 58L, 58R, 58F, 58A) aufweist, der dazu angepasst ist, an die Motorhaube gesichert zu werden, bei der der Montagebügel eine Unterseite des Airbags abdeckt und eine Führungsplatte (63, 63C) aufweist, die die Entfaltung des Airbags nach hinten, wenn der Airbag mit dem Befüllungsgas befüllt wird, unterstützt, bei der der Airbag (35) in dem Gehäuse in einer zusammengefalteten Konfiguration verstaut ist und mit einem Befüllungsgas zur Entfaltung nach hinten aufblasbar ist, und der Airbag an der Rückseite des Gasgenerators in dem Gehäuse verstaut ist, und bei der der Montagebügel (56, 56A, 56 B) den Gasgenerator lagert und den Gasgenerator an der Motorhaube montiert,
**dadurch gekennzeichnet, dass**
das Gehäuse (45) aus einem oberen Gehäuse (46) und einem unteren Gehäuse (50) derart gebildet ist, dass es den Airbag (35) und den Gasgenerator (28) insgesamt abdeckt,
bei der das obere Gehäuse (46) eine Deckenwand (47), welche den Airbag (35) in einer zusammengefalteten Konfiguration und den Gasgenerator (28) von oben abdeckt, eine generell rechteckige rohrförmige zylindrische Umfangswand (48), die sich von der Umfangskante der Deckenwand (47) nach unten erstreckt, und einen Flansch (49) aufweist, der sich nach außen in vier Richtungen von dem unteren Ende der Umfangswand (48) erstreckt,
bei der das untere Gehäuse (50) eine Bodenwand (51), welche die Unterseiten des Airbags (35) und des Gasgenerators (28) abdeckt, eine Innenwand (52), die sich nach oben von der Umfangskante der Bodenwand (51) erstreckt, und einen Flansch (53) aufweist, der sich nach außen in vier Richtungen in einer solchen Weise erstreckt, dass er von der Bodenwand (51) fortsetzt,
bei der, wenn der Gasgenerator (28) in Betrieb gesetzt wird und der Airbag (35) mit einem Befüllungsgas befüllt wird, der Airbag (35) eine hintere Wand (48c) der Umfangswand (48) des oberen Gehäuses (46) und einen hinteren Bereich (52a) der Innenwand (52) des unteren Gehäuses (50) drückt und verformt, und die hintere Wand (48c) und die Innenwand (52) nach hinten öffnen und einen Spalt (S) ausbilden, so dass es dem Airbag (35) ermöglicht ist, sich nach hinten und nach oben zu entfalten.

2. Airbagvorrichtung (M) für einen Fußgängerschutz nach Anspruch 1, bei der die Führungsplatte (63, 63C) einen kleineren vorstehenden Bereich als das Gehäuse (45) in einer Projektionsansicht in einer Oben-/Unten-Richtung aufweist, so dass sie die Unterseite des Airbags teilweise lagert.

3. Airbagvorrichtung (M) für einen Fußgängerschutz nach Anspruch 2, bei der mehr als eine der Führungsplatten (63) sich in Abständen in einer Links-Rechts-Richtung befinden und zwischen sich einen Hohlraum aufweisen, welcher hintere Kanten (63a) derselben, wenn in einer Oben-/Unten-Richtung gesehen, abtrennt.

4. Airbagvorrichtung (M) für einen Fußgängerschutz nach einem der Ansprüche 1 bis 3, bei der
das Gehäuse (45) aus einem Material mit einer formbeständigen Eigenschaft hergestellt ist und eine wasserdichte Eigenschaft aufweist und derart konfiguriert ist, so dass es dem Airbag ermöglicht ist, von dort herauszutreten, und
die Führungsplatte (63, 63C) eine höhere Steifigkeit als das Gehäuse aufweist und bei Entfaltung des Airbags (35) eine Unterseite des Gehäuses lagert.

## Revendications

1. Dispositif de coussin de sécurité gonflable de protection de piéton (M) adapté pour être monté sur une face arrière et à proximité d'une extrémité arrière (10c) d'un capot (10) d'un véhicule (V), le dispositif de coussin de sécurité gonflable comprenant :
un coussin de sécurité gonflable (35) à stocker au niveau de la face arrière du capot dans une configuration repliée ;
un gonfleur (28) pour alimenter le coussin de sécurité gonflable en gaz de gonflage ; et
un boîtier (45) disposé sur la face arrière du capot ; le dispositif de coussin de sécurité gonflable comporte en outre un support de montage (56, 56A, 56B) qui supporte le gonfleur et monte le coussin de sécurité gonflable et le gonfleur sur le capot ; dans lequel le support de montage comporte : une section de maintien de gonfleur (59, 59A, 59B) qui maintient le gonfleur ; et une section de montage (58, 58L, 58R, 58F, 58A) qui est adaptée pour être arrimée au capot ; dans lequel le support de montage couvre une face inférieure du coussin de sécurité gonflable et comporte une plaque de guidage (63, 63C) qui aide à déployer le coussin de sécurité gonflable vers l'arrière à mesure que le coussin de sécurité gonflable se gonfle avec le gaz de gonflage, dans lequel le coussin de sécurité gonflable (35) est stocké dans le boîtier dans une configuration repliée et est gonflable avec un gaz de gonflage pour un déploiement vers l'arrière ; le coussin de sécurité gonflable est stocké à l'arrière du gonfleur dans le boîtier ; et dans lequel le support de montage (56, 56A, 56B) supporte le gonfleur et monte le gonfleur sur le capot,
**caractérisé en ce que** :
le boîtier (45) est composé d'un boîtier supérieur (46) et d'un boîtier inférieur (50) de façon à couvrir totalement le coussin de sécurité gonflable (35) et le gonfleur (28),
dans lequel le boîtier supérieur (46) comporte une paroi de plafond (47) qui couvre le coussin de sécurité gonflable (35) dans une configuration repliée et le gonfleur (28) par le dessus, une paroi circonférentielle tubulaire généralement carrée (48) s'étendant vers le bas depuis le bord périphérique de la paroi de plafond (47) et une bride (49) qui s'étend vers l'extérieur dans quatre directions depuis l'extrémité inférieure de la paroi circonférentielle (48),
dans lequel le boîtier inférieur (50) comporte une paroi basse (51) qui couvre les faces inférieures du coussin de sécurité gonflable (35) et le gonfleur (28), une paroi intérieure (52) s'étendant vers le haut depuis le bord périphérique de la paroi basse (51), et une bride (53) qui s'étend vers l'extérieur dans quatre directions de manière à se prolonger depuis la paroi basse (51) ;
dans lequel, lorsque le gonfleur (28) est actionné et que le coussin de sécurité gonflable (35) se gonfle avec un gaz de gonflage, le coussin de sécurité gonflable (35) pousse et déforme une paroi arrière (48c) de la paroi circonférentielle (48) du boîtier supérieur (46) et une région arrière (52a) de la paroi intérieure (52) du boîtier inférieur (50), et la paroi arrière (48c) et la paroi intérieure (52) s'ouvrent vers l'arrière et forment un écartement (S), permettant ainsi au coussin de sécurité gonflable (35) de se déployer vers l'arrière et vers le haut.

2. Dispositif de coussin de sécurité gonflable de protection de piéton (M) selon la revendication 1, dans lequel la plaque de guidage (63, 63C) a une zone saillante plus petite que le boîtier (45) dans une vue en saillie depuis une direction haut-bas de façon à supporter partiellement la face inférieure du coussin de sécurité gonflable.

3. Dispositif de coussin de sécurité gonflable de protection de piéton (M) selon la revendication 2, dans lequel plus d'une desdites plaques de guidage (63) est située à des positions espacées dans une direction gauche-droite et ont entre elles un espace vide qui sépare des bords arrière (63a) de celle-ci, dans une vue depuis une direction haut-bas.

4. Dispositif de coussin de sécurité gonflable de protection de piéton (M) selon l'une quelconque de la revendication 1 à la revendication 3, dans lequel :
le boîtier (45) est fabriqué en un matériau doté d'une propriété de mémoire de forme, et a une propriété d'étanchéité à l'eau, et est configuré de façon à permettre l'émergence d'un coussin de sécurité gonflable depuis celui-ci ; et la plaque de guidage (63, 63C) a une rigidité supérieure au boîtier et supporte une face inférieure du boîtier lors du déploiement du coussin de sécurité gonflable (35).
